Europäisches Patentamt

European Patent Office

Office européen des brevets

(11) Veröffentlichungsnummer: **0 117 465**
A1

# EUROPÄISCHE PATENTANMELDUNG

(21) Anmeldenummer: 84101318.8

(22) Anmeldetag: 09.02.84

(51) Int. Cl.³: **F 16 H 1/16**

(30) Priorität: 24.02.83 DE 3306440

(43) Veröffentlichungstag der Anmeldung: 05.09.84
Patentblatt 84/36

(84) Benannte Vertragsstaaten: **AT BE CH DE FR GB IT LI LU NL SE**

(71) Anmelder: **Thyssen Industrie AG, Am Thyssenhaus 1, D-4300 Essen (DE)**

(72) Erfinder: **Jarchow, Friedrich, Prof. Dr.-Ing., Am Ruhrstein 37, D-43000 Essen (DE)**
Erfinder: **Predki, Wolfgang, Dr.-Ing., Denrodtstrasse 11a, D-4620 Castrop-Rauxel (DE)**

(74) Vertreter: **Eberhard, Friedrich, Dr. et al, Am Thyssenhaus 1, D-4300 Essen (DE)**

(54) **Stirnrad-Globoid-Schneckentriebe.**

(57) Stirnrad-Globoid-Schneckentriebe bestehen aus einem schrägverzahnten Evolventenstirnrad und einer Globoidschnecke. Die Anmeldung gibt erfindungsgemässe Beziehungen für den Schrägungswinkel am Teilkreis des Rades, den Normalschnittmodul des Rades und den mittleren Durchmesser der Globoidschnecke an, die zu optimalen Verzahnungsgeometrien führen. Nach der Anmeldung optimierte Getriebe erreichen höhere Lebensdauerwerte gegen Grübchen und Verschleiß sowie größere Verzahnungswirkungsgrade. Man kommt in vorteilhafter Weise im Vergleich zu bekannten Stirnrad-Globoid-Schneckentrieben mit der halben Radbreite aus.

EP 0 117 465 A1

Essen, den 6.2.1984
PZ 3346 EB/bk

Thyssen Industrie AG
Am Thyssenhaus 1
4300 Essen 1

Stirnrad-Globoid-Schneckentriebe

Die Erfindung betrifft Schneckentriebe, die aus einem schrägverzahnten Evolventenstirnrad und einer Globoidschnecke bestehen.

Solche Getriebe werden z.B. im allgemeinen Maschinenbau eingesetzt, wenn die Forderungen nach gekreuzter Achslage, großer Übersetzung in einer Stufe und schwingungs- sowie geräuschdämpfendem Lauf zu erfüllen sind.

Das Verhalten solcher SG-Schneckentriebe ist z.B. von Niemann und Jarchow ("Versuche an Stirnrad-Globoid-Schneckentrieben", VDI-Z., Bd. 103, Nr. 6, Seiten 209 bis 280, 21. Februar 1961) beschrieben worden.

Es muß als Nachteil angesehen werden, daß es bisher noch keine Lehren gibt, um SG-Schneckentriebe bezüglich der Hertzschen Pressung, der mittleren Schmierspalthöhe in der Verzahnung und bezüglich der Verzahnungswirkungsgrade in ihrer Geometrie optimal auszulegen.

Der Erfindung liegt daher die Aufgabe zugrunde, Beziehungen für optimale Verzahnungsgeometrien zu suchen.

- 2 -

Die Aufgabe wird erfindungsgemäß dadurch gelöst, daß der Teilkreisschrägungswinkel des Stirnrades der Beziehung

$$\beta_{01} = 57,8 \cdot \frac{z_2 \cdot m_n \cdot A_3}{A_1 \cdot A_3 - A_2} \cdot (1 \pm 0,05)$$

genügt mit

$$A_1 = 2a - m_n \cdot z_1 \cdot 0,93$$

$$A_2 = 0,6 \cdot (z_2 \cdot m_n)^2 \cdot z_1 \cdot m_n$$

$$A_3 = (2a - m_n \cdot z_1 \cdot 0,97)^2$$

wobei a der Achsabstand, $z_2$ die Zähnezahl der Schnecke, $z_1$ die Zähne-zahl des Stirnrades und $m_n$ der Modul des Stirnrades im Normalschnitt sind.

In weiterer Ausbildung der Erfindung gelten für auf kleine Hertzsche Pressungen und auf große Schmierspalte optimierte SG-Schneckentriebe für den Modul im Normalschnitt des Stirnrades

$$m_n = a \cdot (0,5 \cdot 10^{-2} + 1,05 \frac{1}{z_1}) \cdot (1 \pm 0,1)$$

und für den mittleren Durchmesser der Globoidschnecke im Stirnmittel-schnitt ihrer Verzahnung

$$d_{m2} = a \cdot \left[ 2 - \frac{m_n}{a} \cdot (1,05 z_1 + 0,45) \right] \cdot (1 \pm 0,06)$$

sowie für auf kleine Hertzsche Pressungen und auf große Verzahnungs-wirkungsgrade optimierte SG-Schneckentriebe für den Modul im Normal-schnitt des Stirnrades

$$m_n = a \cdot (0,5 \cdot 10^{-2} + 1,2 \frac{1}{z_1}) \cdot (1 \pm 0,04)$$

... für den mittleren Durchmesser der Globoidschnecke im Stirnmittel-schnitt ihrer Verzahnung

$$d_{m2} = a \cdot \left[ 2 - \frac{m_n}{a} \cdot (z_1 \div 1,89) \right] \cdot (1 \pm 0,06).$$

Die mit der Erfindung erzielten Vorteile bestehen darin, daß die optimierten SG-Schneckentriebe höher belastbar sind, weniger verschleißen und bessere Verzahnungswirkungsgrade aufweisen.

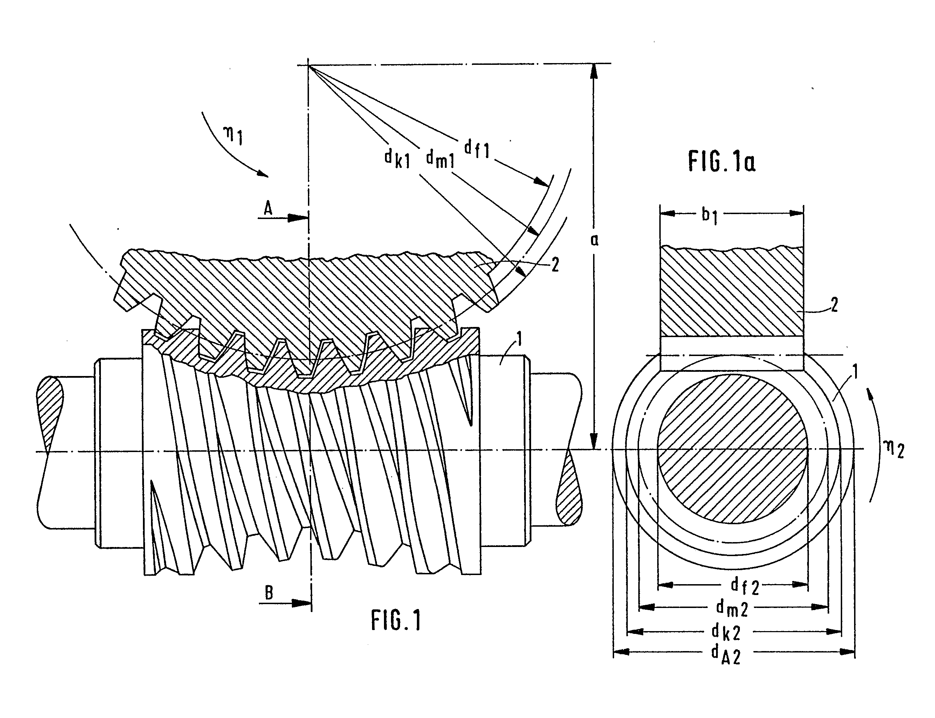

Fig. 1 zeigt die Hauptabmessungen eines SG-Schneckentriebes. Der Index 1 gilt für das zylindrische Stirnrad und der Index 2 für die globoidische Schnecke. Es bedeuten

| | | | |
|---|---|---|---|
| $d_f$ | Fußkreisdurchmesser | n | Drehzahl |
| $d_m$ | mittlerer Durchmesser | a | Achsabstand |
| $d_K$ | Kopfkreisdurchmesser | b | Radbreite |
| $d_A$ | äußerer Durchmesser | | |

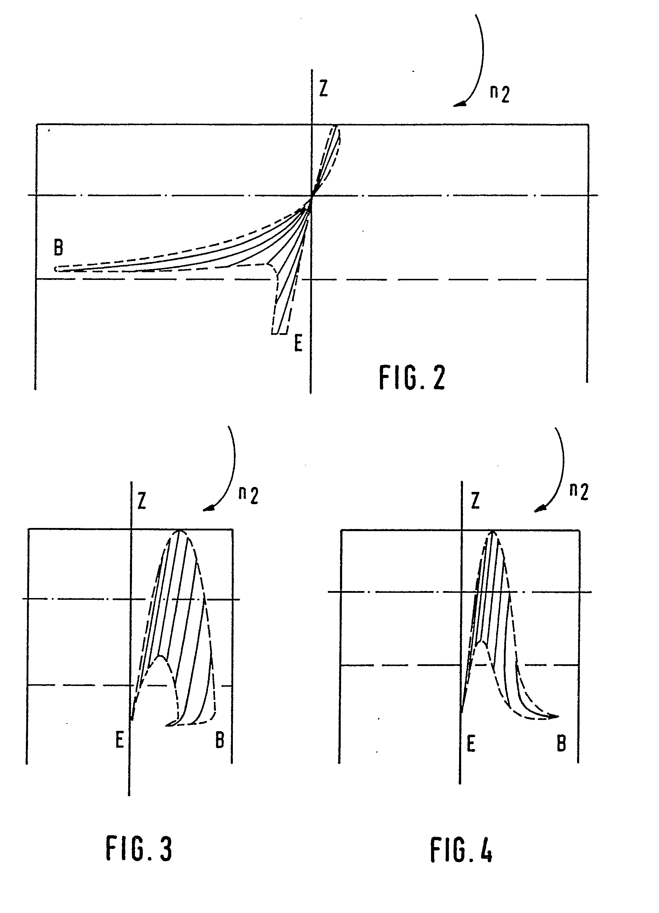

Die Fig. 2, 3 und 4 zeigen als Beispiele jeweils den auf eine Stirnebene der Globoidschnecke projizierten Verlauf der Berührlinien und die Umgrenzung des Eingriffsfeldes. Die Radzähne steigen rechts. Bei der eingetragenen Drehrichtung der Globoidschnecke beginnt der Eingriff in B und endet in E. Die Berührlinien liegen im Abstand einer Teilung auseinander. Ihre Anzahl ist also gleich der Zahl der im Eingriff sich befindenden Radzähne. Die Berührlinein verteilen sich im wesentlichen auf eine Radhälfte. Bei Drehrichtungsumkehr kommt aber die andere Radhälfte zum Tragen. Es bedeuten $x_1$ der Profilverschiebungsfaktor bei der Herstellung des Stirnrades und x der Profilverschiebungsfaktor bei der Herstellung der Globoidschnecke.

Fig. 2 gilt für einen bekannten SG-Schneckentrieb, bezeichnet mit SG-a-3. Fig. 3 trifft für einen auf kleine Hertzsche Pressungen und hohe Verzahnungswirkungsgrade optimierten und Fig. 4 für einen auf kleine Hertzsche Pressungen und große Schmierspalthöhen optimierten SG-Schneckentrieb zu. Man kommt bei den optimierten SG-Schneckentriebe im Vergleich zu bekannten mit etwa der halben Radbreite aus.

0117465

Die SG-Schneckentriebe nach den Fig. 3 und 4 haben gegenüber dem bekannten SG-Schneckentrieb nach Fig. 2 eine etwa 5-fach höhere Lebensdauer gegen Grübchen; im Vergleich zum bekannten SG-Schneckentrieb nach Fig. 2 weisen der SG-Schneckentrieb nach Fig. 3 bzw. Fig. 4 1,7-fach bzw. 2-fach größere Schmierspalthöhen und einen um 4% bzw. 3% besseren Verzahnungswirkungsgrad auf.

Patentansprüche:

1.  Schneckentrieb, bestehend aus einem schrägverzahnten Evolventenstirnrad und einer Globoidschnecke, dadurch gekennzeichnet, daß der Teilkreisschrägungswinkel des Stirnrades der Beziehung

$$\beta_{01} = 57{,}8 \cdot \frac{z_2 \cdot m_n \cdot A_3}{A_1 \cdot A_3 - A_2} \cdot (1 \pm 0{,}05)$$

genügt mit

$$A_1 = 2\,a - m_n \cdot z_1 \cdot 0{,}93$$

$$A_2 = 0{,}6 \cdot (z_2 \cdot m_n)^2 \cdot z_1 \cdot m_n$$

$$A_3 = (2\,a - m_n \cdot z_1 \cdot 0{,}97)^2$$

wobei $a$ der Achsabstand, $z_2$ die Zähnezahl der Schnecke, $z_1$ die Zähnezahl des Stirnrades und $m_n$ der Modul des Stirnrades im Normalschnitt sind.

2.  Schneckentrieb nach Anspruch 1, dadurch gekennzeichnet, daß der Modul des Stirnrades im Normalschnitt der Gleichung

$$m_n = a \cdot (0{,}5 \cdot 10^{-2} + 1{,}05\,\frac{1}{z_1}) \cdot (1 \pm 0{,}1)$$

genügt und daß der mittlere Durchmesser der Globoidschnecke im Stirnmittelschnitt ihrer Verzahnung der Beziehung

$$d_{m2} = a \cdot \left[ 2 - \frac{m_n}{a} \cdot (1{,}05\,z_1 + 0{,}45) \right] \cdot (1 \pm 0{,}06)$$

genügt.

3. Schneckentrieb nach Anspruch 1, dadurch gekennzeichnet, daß der Modul des Stirnrades im Normalschnitt der Gleichung

$$m_n = a \cdot (0,5 \cdot 10^{-2} + 1,2 \frac{1}{z_1}) \cdot (1 \pm 0,04)$$

genügt und daß der mittlere Durchmesser der Globoidschnecke im Stirnmittelschnitt ihrer Verzahnung der Beziehung

$$d_{m2} = a \cdot \left[ 2 - \frac{m_n}{a} \cdot (z_1 + 1,89) \right] \cdot (1 \pm 0,06)$$

genügt.

FIG.1a

FIG.1

$\eta_2$

$\eta_1$

$b_1$

$d_{f2}$

$d_{m2}$

$d_{k2}$

$d_{A2}$

$a$

$d_{f1}$

$d_{m1}$

$d_{k1}$

A

B

1

2

FIG. 2

FIG. 3

FIG. 4

## EINSCHLÄGIGE DOKUMENTE

EP 84101318.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US - A - 1 790 608 (TRBOJEVICH) <br> * Gesamt * <br> -- | | F 16 H 1/16 |
| A | US - A - 1 792 782 (TRBOJEVICH) <br> * Gesamt * <br> -- | | |
| A | US - A - 1 902 683 (WILDHABER) <br> * Gesamt * <br> -- | | |
| A | US - A - 2 935 886 (WILDHABER) <br> * Gesamt * <br> -- | | |
| A | US - A - 2 935 887 (WILDHABER) <br> * Gesamt * <br> -- | | |
| A | US - A - 2 935 888 (WILDHABER) <br> * Gesamt * <br> -- | | RECHERCHIERTE SACHGEBIETE (Int. Cl. ³) |
| A | US - A - 3 079 808 (WILDHABER) <br> * Gesamt * <br> -- | | F 16 H 1/00 <br> F 16 H 55/00 |
| A | US - A - 3 386 305 (WILDHABER) <br> * Gesamt * <br> -- | | |

Der vorliegende Recherchenbericht wurde für alle Patentansprüche erstellt.

| Recherchenort | Abschlußdatum der Recherche | Prüfer |
|---|---|---|
| WIEN | 08-05-1984 | SCHATEK |

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| T | DR.-ING. G. NIEMANN "Maschinen-elemente", II. Band, 1965<br><br>SPRINGER-VERLAG, Berlin, Heidelberg, New York<br>Seiten 151-154, 160-167<br><br>    * Seiten 160-167 *<br><br>-- | |
| T,D | VDI-ZEITSCHRIFT, Band 103, Nr. 6, Niemann "Versuche an.Stirnrad-Globoid-Schneckentrieben"<br><br>VDI-VERLAG, Düsseldorf<br>Seiten 209-221<br><br>---- | |

**KLASSIFIKATION DER ANMELDUNG (Int. Cl.³)**

**RECHERCHIERTE SACHGEBIETE (Int. Cl.³)**